# EUROPEAN PATENT SPECIFICATION

(11) **EP 2 471 361 B1**
(45) Date of publication and mention of the grant of the patent: **04.01.2017**
(21) Application number: 11189969.6
(22) Date of filing: 21.11.2011
(51) Int. Cl.: A01N 3/02, A01N 59/00, A01N 59/02, A01N 59/06, A01N 59/08, A01N 59/14, A01N 43/08, A01N 43/16, A01N 37/02, A01N 37/10, G01N 33/00, A01G 5/06, A01N 43/707, A01P 21/00

(54) **TREATMENT PRODUCT FOR CUT FLOWERS**
BEHANDLUNGSPRODUKT FÜR SCHNITTBLUMEN
PRODUIT DE TRAITEMENT POUR FLEURS COUPÉES

(30) Priority: 30.11.2010 EP 10193172
(43) Date of publication of application: 04.07.2012
(73) Proprietor: Enhold B.V., 1411 DD Naarden (NL)
(72) Inventor: Janssen, Johannes Antonius Marie, 1325 LC Almere (NL)
(74) Representative: Nederlandsch Octrooibureau

(56) References cited:
- WO-A1-02/17717
- WO-A1-2005/023022
- WO-A1-2008/000741
- WO-A1-2009/010981
- DE-A1-102005 033 347
- GB-A- 1 002 867
- US-A1- 2004 262 233
- DATABASE WPI Week 200411 Thomson Scientific, London, GB; AN 2004-102808 XP002635466, & JP 2004 002228 A (KUMIAI CHEM IND CO LTD) 8 January 2004 (2004-01-08) & JP 2004 002228 A (KUMIAI CHEM IND CO LTD) 8 January 2004 (2004-01-08)
- DATABASE WPI Week 200535 Thomson Scientific, London, GB; AN 2005-337050 XP002635467, & JP 2005 104961 A (KYOTO BIOMEDICAL SCI KK) 21 April 2005 (2005-04-21) & JP 2005 104961 A (KYOTO BIOMEDICAL SCI KK) 21 April 2005 (2005-04-21)
- S., M., ALAM, S. RAZA: "Micronutrient Fertilizers", PAKISTAN JOURNAL OF BIOLOGICAL SCIENCES , vol. 4, no. 11 2001, pages 1446-1450, XP002635537, DOI: 10.3923/pjbs.2001.1446.1450 Retrieved from the Internet: URL:http://scialert.net/abstract/?doi=pjbs .2001.1446.1450 [retrieved on 2011-05-06]

## Description

### TECHNICAL FIELD OF THE INVENTION

This invention relates to treatment products for cut flowers. These treatment products may be used, for instance, to provide nutrients, to increase flower longevity . More specifically, the invention is in the field of monitoring the application of such treatment products to water that is used to place cut flowers in.

### BACKGROUND OF THE INVENTION

The business of harvesting and supplying cut flowers from growing point to markets all over the world has created the need for treatment products that are applied to the water that the cut flowers are placed in. These treatment products prolong the life of the cut flowers and make it possible for the cut flowers to be shipped all over the world from their place of being grown to their final delivery point and arrive in saleable condition. Cut flower treatment products are usually sold as concentrates and as such they are added to water in a certain concentration after which the cut flowers are placed in this mixture of water and product. Cut flower treatment products can also be sold as ready to use solutions.

The intended effects of the treatment products are many and varied. Some of the treatment products are designed to curtail ethylene production by the flowers, or reduce the sensitivity to ethylene of the flowers.

Other treatment products are designed to decrease leaf yellowing and/or decrease microbial growth in the flower water and flower stem and/or decrease flower stem growth and/or stimulate water uptake. In addition, other treatment products can provide the flowers with nutrition for better development. The general flower quality, as measured by such criteria as vase life and/or leaf quality and/or flower quality, is improved by using these treatment products.

The cut flower treatment products can be used anywhere in the post-harvest chain of the flowers. Cut flower treatment products can be used by growers, auctions, bouquet makers, supermarkets, florists and individual consumers. In the post-harvest chain of cut flowers several treatment products can be used consecutively, while combination of two or more products at one time is also possible. The duration of the treatment may vary from "quick dips" of about 10 seconds up to longer "transport treatments" which can last for many days. Many of the treatment programs are described as being short "pulse treatments" of about four hours.

In order to ensure that the cut flowers remain fresh and in saleable condition, it is important that the proper amount, usually referred to as "dosage" of treatment product is applied. Incorrect dosage can lead to serious problems. Overdosage may result in phytotoxicity symptoms in the cut flowers and consequently decrease instead of increase their vase life; moreover, the environment is exposed to more active ingredients than required in this case. In the case of underdosage, suboptimal results will be obtained as the flowers are exposed to an insufficient amount of active component(s). In the case of microbial growth, underdosage might even result in adverse effects as non anti-microbial ingredients in the products are then likely to stimulate microbial growth.

WO 02/17717 describes a method for determining whether the desired amount of treatment product is present in water that cut flowers are placed in; comprising the steps of:
a) adding a known amount of an inert fluorescent tracer to a known amount of a treatment product, with said treatment product being suitable for application to water that cut flowers are placed in;
b) applying said treatment product to water that cut flowers are placed in;
c) using a fluorometer to measure the fluorescent signal of said inert fluorescent tracer in said water that cut flowers are placed in; and optionally
d) adjusting the amount of treatment product applied to said water that cut flowers are placed in, based on the measured fluorescent signal of said inert fluorescent tracer.

The method described in WO 02/17717 has the drawback that the fluorescent signal may be influenced by other components contained in the water that cut flowers are placed in. Furthermore, these fluorescent substances may be unstable or they may react with components present in the flower water, resulting in erroneous estimates of the amount of treatment product that has been applied.

DE 10 2005 033347 describes the use of an alkali metal halogenide as a tracer in pharmaceutical products, cosmetic products, cleaning products and detergents.

US 2004/262233 describes a method for controlling the concentration of a water treatment chemical, comprising:
- adding a water-soluble lithium salt as a tracer substance along with the water treatment chemical to water to be treated;
- electrochemically or optically measuring concentration of lithium ions using a lithium ion sensitive substance; and
- using the measured lithium ion concentration to control the concentration of the water treatment chemical added to the water to be treated.

JP 2005-104961 describes a composition for maintaining the freshness of cut flowers which is characterized by containing of 6-benzylamino purine as growth-promoting agent and potassium alum as pigment fixating agent. The examples describe compositions further comprising a sugar like fructose (1 wt.%) or trehalose (0.01 or 0.5 wt.%), dipotassium hydrogen citrate (400 ppm) as acidulant, and silver sulphate (0.1 or 1 ppm) or silver nitrate as a disinfectant.

### SUMMARY OF THE INVENTION

The inventors have found a way to overcome the drawbacks associated with the use of fluorescent tracer substances in treatment products for cut flowers in accordance with WO 02/17717. More specifically, the inventors have found that these drawbacks may be overcome by incorporating in the flower treatment product a small amount of a tracer element selected from lithium, molybdenum, boron, cerium, silver, selenium, strontium, tin, cesium and lanthanum. These tracer elements can be applied in very low concentrations because tap water usually contains not more than minute amounts of these elements and because the concentrations of these elements in water can be reliably determined at very low concentrations with the help of inductively coupled plasma spectrometry (ICP).

Thus, the invention provides a method of determining the concentration of a treatment product in water that cut flowers are placed in, said method comprising the steps of:
- providing a treatment product containing a known amount of a tracer element selected from lithium, molybdenum, boron, cerium, silver, selenium, strontium, tin, cesium and lanthanum;
- applying the treatment product to water that cut flowers are placed in;
- quantitatively analysing the concentration of the tracer element substance in said water that cut flowers are placed in, said quantitative analysing comprising the use of inductively coupled plasma spectrometry (ICP); and
- comparing the quantified tracer concentration with a preset target value.

The present invention also relates to a floral distribution kit comprising:
- a receptacle having an open top and a hollow interior adapted for receiving water therein;
- a quantity of water that comprises a flower treatment product and that is held within the hollow interior; and
- one or more cut flowers whose stems are inserted through the open top of the receptacle into the water that comprises a flower treatment product;
wherein the water comprising the flower treatment product contains a tracer element selected from lithium, molybdenum and cerium.

Finally, the present invention provides a treatment product for cut flowers containing a tracer element selected from lithium, molybdenum and cerium.

### DETAILED DESCRIPTION OF THE INVENTION

Accordingly, one aspect of the present invention relates to a method of determining the concentration of a treatment product in water that cut flowers are placed in, said method comprising the steps of:
a) providing a treatment product containing a known amount of a tracer element selected from lithium, molybdenum, boron, cerium, silver, selenium, strontium, tin, cesium and lanthanum, said treatment product being suitable for application to water that cut flowers are placed in;
b) applying the treatment product to water that cut flowers are placed in;
c) quantitatively analysing the concentration of the tracer element substance in said water that cut flowers are placed in, said quantitative analysing comprising the use of inductively coupled plasma spectrometry (ICP);
d) comparing the quantified tracer concentration with a preset target value; and
e) optionally, adjusting the amount of treatment product applied to said water that cut flowers are placed in, based on the difference between the quantified concentration and the target value.

The term "water-soluble" as used herein means that metal salt has a water solubility at 20 °C of at least 20 mg/l, more preferably of at least 100 mg/l.

The flower treatment product of the present invention preferably contains one or more flower treatment components selected from nutrients, flower longevity enhancers and biocides.

According to a particularly preferred embodiment, the flower treatment product employed in the present method is a flower treatment product as defined below.

According to yet another preferred embodiment, the application (addition) of the treatment product to water that cut flowers are placed into yields a flower water as comprised in the flower distribution kit that is described below.

Preferably, the water-soluble metal salt employed in accordance with the present method is a salt of a metal selected from the group consisting of lithium, molybdenum, boron, cerium and silver, especially from the group consisting of lithium, molybdenum, cerium and silver.

According to a particularly preferred embodiment, the water-soluble metal salt employed in accordance with the present invention is a water soluble lithium salt or a water soluble molybdenum salt. Even more preferably, the water-soluble metal salt is a water soluble lithium salt, especially a water-soluble salt selected from lithium halide, lithium carbonate, lithium sulphate, lithium hydroxide and combinations thereof.

Yet another aspect of the present invention relates to a floral distribution kit comprising:
- a receptacle having an open top and a hollow interior adapted for receiving water therein;
- a quantity of water that comprises a flower treatment product and that is held within the hollow interior; and
- one or more cut flowers whose stems are inserted through the open top of the receptacle into the water that comprises a flower treatment product;
wherein the water comprising the flower treatment product contains 0.05-100 mg/l of a tracer element selected from lithium, molybdenum and cerium;
and one or more of:
- at least 500 mg/l carbohydrate selected from the group consisting of glucose, fructose, sucrose, lactose, maltose and combinations thereof;
- at least 50 mg/l acidulant selected from the group consisting of gluconic acid, glucono-deltalactone, citric acid, tartaric acid, propionic acid, glycolic acid, fumaric acid, sorbic acid, malic acid, aluminium sulphate and combinations thereof;
- at least 0.5 mg/l biocide selected from the group consisting of quaternary ammonium compounds containing at least one C₆-C₂₄ hydrocarbon residue, guanidine compounds containing at least one C₆-C₂₄ hydrocarbon residue, bromo-nitrogen derivates (e.g. 2-bromo-2-nitropropane-1,3-diol , 2,2-dibromo-3-itrilopropionamide, 1-bromo-1-(bromomethyl)-1,3-propanedicarbonitrile, 2-(2-bromo-2-nitroethenyl)furan, beta-bromo-beta-nitrostyrene, beta-nitrostyrene, beta-nitrovinyl furan, 2-bromo-2-bromomethyl glutaronitrile), isothiazolinones, hydroxyquino lines, 1,3-dihalo-5,5-dimethylhydantoins, chloramphenicol, spectinomycin, alkyl parabens, salicylic acids and salts thereof, benzoic acids and salts thereof, sorbates, thiabendazole1,3-dichloro-5,5-dimethyl¬hydantoin, N-chlorosulfonamides, isocyanurates, lysozymes and combinations thereof;
- at least 5 mg/l surfactant selected from non-ionic surfactants, anionic surfactants and combinations thereof.

The receptacle comprised in the distribution kit can hold a single flower, a few flowers, a complete bunch of flowers or several bunches of flowers. Accordingly, depending on the number of cut flowers held by the receptacle, the quantity of water contained therein can vary from 1 ml to 50 1. Preferably, the quantity of water contained in the receptacle is in the range 0.1-10 1, most preferably in the range of 0.5-5 1.

According to a particularly preferred embodiment, the tracer element is selected from lithium and molybdenum, lithium being most preferred.

Lithium is preferably contained in the water that comprises a flower treatment product in a concentration of 0.1-50 mg/l, most preferably of 0.15-10 mg. Molybdenum is advantageously contained in said water in a concentration of 0.1-10 mg/l.

In accordance with one embodiment of the present kit, the water that comprises the flower treatment product contains at least 500 mg/l of a carbohydrate selected from the group consisting of glucose, fructose, sucrose, lactose, maltose and combinations thereof.

In accordance with another embodiment, the flower water contains at least 50 mg/l of an acidulant selected from the group consisting of gluconic acid, glucono-deltalactone, citric acid, tartaric acid, propionic acid, glycolic acid, fumaric acid, sorbic acid, malic acid, aluminium sulphate and combinations thereof.

In accordance with a further embodiment, the flower water contains at least 0.5 mg/l of a biocide selected from the group consisting of quaternary ammonium compounds containing at least one C₆-C₂₄ hydrocarbon residue, guanidine compounds containing at least one C₆-C₂₄ hydrocarbon residue, bromo-nitrogen derivates, isothiazolinones, hydroxyquino lines, 1,3-dihalo-5,5-dimethylhydantoins, chloramphenicol, spectinomycin, alkyl parabens, salicylic acids and salts thereof, benzoic acids and salts thereof, sorbates, thiabendazole1,3-dichloro-5,5-dimethylhydantoin, N-chlorosulfonamides, isocyanurates, lysozymes and combinations thereof.

In accordance with yet another embodiment, the flower water contains at least 5 mg/l of a surfactant selected from non-ionic surfactants, anionic surfactants and combinations thereof.

Preferably, the flower treatment product contained in the flower water comprises at least 2, more preferably at least 3 of the aforementioned flower treatment components, i.e. carbohydrate, acidulant, biocide and surfactant.

Another aspect of the invention relates to a treatment product for cut flowers, said treatment product comprising by weight of dry matter:
a) 0-99% (w/w), preferably 30-60% (w/w) of a carbohydrate selected from the group consisting of glucose, fructose, sucrose, lactose, maltose and combinations thereof;
b) 0-50% (w/w), preferably 1-10% (w/w) of an acidulant selected from the group consisting of gluconic acid, glucono-deltalactone, citric acid, tartaric acid, propionic acid, glycolic acid, fumaric acid, sorbic acid, malic acid, aluminium sulphate and combinations thereof;
c) 0-99.9% (w/w), preferably 0.1-10% (w/w) of a biocide selected from the group consisting of quaternary ammonium compounds containing at least one C₆-C₂₄ hydrocarbon residue, guanidine compounds containing at least one C₆-C₂₄ hydrocarbon residue, bromo-nitrogen derivates, isothiazolinones, hydroxyquino lines, 1,3-dihalo-5,5-dimethylhydantoins, chloramphenicol, spectinomycin, alkyl parabens, salicylic acids and salts thereof, benzoic acids and salts thereof, sorbates, thiabendazole1,3-dichloro-5,5-dimethylhydantoin, N-chlorosulfonamides, isocyanurates, lysozymes and combinations thereof;
d) 0-50% (w/w), preferably 0.1-10% (w/w) of a surfactant selected from non-ionic surfactants, anionic surfactants and combinations thereof;
wherein the components (a) to (d) together represent at least 10% (w/w) of the dry matter contained in the treatment product; and wherein the treatment product further contains 20-50,000 mg of a tracer element by kg of dry matter, said tracer element being selected from lithium, molybdenum and cerium. Even more preferably, the trace element is selected from lithium and molybdenum, most preferably the trace element is lithium.

According to a particularly preferred embodiment, the present flower treatment product comprises at least 2, more preferably at least 3 of the flower treatment components. carbohydrate, acidulant, biocide and surfactant.

According to one embodiment, the flower treatment product is an aqueous liquid containing 10-800 g, preferably 25-600 g of dry matter per litre.

According to another embodiment, the flower treatment product is a solid selected from a powder or a tablet. More preferably, said solid product is a tablet, preferably a tablet having a weight of 0.1-10 g.

According to a preferred embodiment, the present treatment product contains a surfactant, especially a surfactant selected from partial esters of fatty acids with hexitol anhydrides, polyethoxylated octyl- or nonylphenols, oxyethylated straight chain alcohols, nonionic surfactants comprising block copolymers of propylene oxide and ethylene oxide, nonionic surfactants which are block polymers of polyoxyalkylene derivatives of ethylenediamine, alkali metals salts of esters of sulfosuccinic acid and combinations thereof.

The invention is further illustrated by means of the following non-limiting examples.

### EXAMPLES

### Example 1

A liquid product for treating cut flowers is prepared on the basis of the following recipe:

| | % (w/v) |
|---|---|
| Aluminium sulfate 14-hydrate | 8 |
| Dextrose | 36 |
| Lithium chloride | 0.065 |
| Water | Remainder |

The liquid product is added to tap water in a dosage of 10 ml per litre, yielding a Li concentration of 1 mg per liter. The water containing the treatment product is poured into buckets and subsequently, cut flowers are placed into these buckets.

Water samples are taken from the buckets and filtered over a 12-15 µm filter to remove coarse material. Subsequently 100 µl 1M HNO₃ is added to 10 ml sample solution prior to ICP analysis. A calibration line from 0 to 2 ppm Li is used to determine the Li concentration in the sample. The Li concentration is determined to be approximately 1 ppm.

Alternatively, the lithium concentration is measured with an all-solid-contact Lithium-selective electrode. A 5-point calibration of the electrode is carried out in the range from 0 to 2 ppm Li by accurately adding the liquid product to ultrapure (type 1) water in various dosages (0, 5, 10, 15 and 20 ml per litre). Subsequently the electrode is inserted into the water sample containing the treatment product. The lithium concentration is determined to be approximately 1 ppm.

### Example 2

A powder product for treating cut flowers is prepared by dry mixing on the basis of the following recipe:

| | % (w/w) |
|---|---|
| Aluminium sulfate 14-hydrate | 69.1 |
| Sodium dichloroisocyanurate | 30.0 |
| Sodium molybdate dihydrate | 0.9 |

The powder product is added to tap water in a dosage of 300 mg per litre, yielding a Mo concentration of 1 mg per liter. The water containing the added powder product is poured into buckets and subsequently, cut flowers are placed into these buckets.

Water samples are taken from the buckets and filtered over a 12-15 µm filter to remove coarse material. Subsequently 100 µm 1M HNO₃ is added to 10 ml sample solution prior to ICP analysis. A calibration line from 0 to 2 ppm Mo is used to determine the Mo concentration in the sample. The Mo concentration is determined to be approximately 1 ppm.

## Claims

1. A method of determining the concentration of a treatment product in water that cut flowers are placed in, said method comprising the steps of:
a. providing a treatment product containing a known amount of a tracer element selected from lithium, molybdenum, boron, cerium, silver, selenium, strontium, tin, cesium and lanthanum, said treatment product being suitable for application to water that cut flowers are placed in;
b. applying the treatment product to water that cut flowers are placed in;
c. quantitatively analysing the concentration of the tracer element in said water that cut flowers are placed in, said quantitative analysing comprising the use of inductively coupled plasma spectrometry (ICP);
d. comparing the quantified tracer concentration with a preset target value; and
e. optionally, adjusting the amount of treatment product applied to said water that cut flowers are placed in, based on the difference between the quantified concentration and the target value.

2. Method according to claim 1, wherein the tracer element is selected from lithium and molybdenum.

3. Method according to claim 1 or 2, wherein the treatment product comprises by weight of dry matter:
a) 0-99% (w/w) of a carbohydrate selected from the group consisting of glucose, fructose, sucrose, lactose, maltose and combinations thereof;
b) 0-50% (w/w) of an acidulant selected from the group consisting of gluconic acid, glucono-deltalactone, citric acid, tartaric acid, propionic acid, glycolic acid, fumaric acid, sorbic acid, malic acid, aluminium sulphate and combinations thereof;
c) 0-99.9% (w/w) of a biocide selected from the group consisting of quaternary ammonium compounds containing at least one C₆-C₂₄ hydrocarbon residue, guanidine compounds containing at least one C₆-C₂₄ hydrocarbon residue, bromo-nitrogen derivates, isothiazolinones, hydroxyquinolines, 1,3-dihalo-5,5-dimethylhydantoins, chloramphenicol, spectinomycin, alkyl parabens, salicylic acids and salts thereof, benzoic acids and salts thereof, sorbates, thiabendazole1,3-dichloro-5,5-dimethylhydantoin, N-chlorosulfonamides, isocyanurates, lysozymes and combinations thereof;
d) 0-50% (w/w) of a surfactant selected from non-ionic surfactants, anionic surfactants and combinations thereof;
wherein the components (a) to (d) together represent at least 10% (w/w) of the dry matter contained in the treatment product; and wherein the treatment product further contains 20-50,000 mg of the tracer element by kg of dry matter, said tracer element being selected from lithium, molybdenum, cerium and silver.

4. Method according to claim 3, wherein the treatment product comprises at least 2, preferably at least 3 of the flower treatment components (a) to (d).

5. A floral distribution kit comprising:
• a receptacle having an open top and a hollow interior adapted for receiving water therein;
• a quantity of water that comprises a flower treatment product and that is held within the hollow interior; and
• one or more cut flowers whose stems are inserted through the open top of the receptacle into the water that comprises a flower treatment product;
wherein the water comprising the flower treatment product contains 0.05-100 mg/l of a tracer element selected from lithium, molybdenum and cerium ;
and one or more of:
• at least 500 mg/l carbohydrate selected from the group consisting of glucose, fructose, sucrose, lactose, maltose and combinations thereof;
• at least 50 mg/l acidulant selected from the group consisting of gluconic acid, glucono-deltalactone, citric acid, tartaric acid, propionic acid, glycolic acid, fumaric acid, sorbic acid, malic acid, aluminium sulphate and combinations thereof;
• at least 0.5 mg/l biocide selected from the group consisting of quaternary ammonium compounds containing at least one C₆-C₂₄ hydrocarbon residue, guanidine compounds containing at least one C₆-C₂₄ hydrocarbon residue, bromo-nitrogen derivates, isothiazolinones, hydroxyquinolines, 1,3-dihalo-5,5-dimethylhydantoins, chloramphenicol, spectinomycin, alkyl parabens, salicylic acids and salts thereof, benzoic acids and salts thereof, sorbates, thiabendazole1,3-dichloro-5,5-dimethyhhydantoin, N-chlorosulfonamides, isocyanurates, lysozymes and combinations thereof;
• at least 5 mg/l surfactant selected from non-ionic surfactants, anionic surfactants and combinations thereof.

6. Floral distribution kit according to claim 5, wherein the water that comprises the flower treatment product contains a tracer element selected from 0.1-50 mg/l of lithium and 0.1-10 mg/l of molybdenum.

7. Floral distribution kit according to claim 5 or 6, wherein the water that comprises the flower treatment product contains from 0.15-10 mg/l of lithium.

8. Floral distribution kit according to any one of claims 5-7, wherein the water that comprises the flower treatment product contains at least 500 mg/l of a carbohydrate selected from the group consisting of glucose, fructose, sucrose, lactose, maltose and combinations thereof.

9. Floral distribution kit according to any one of claims 5-8, wherein the water that comprises the flower treatment product contains at least 50 mg/l of an acidulant selected from the group consisting of gluconic acid, glucono-deltalactone, citric acid, tartaric acid, propionic acid, glycolic acid, fumaric acid, sorbic acid, malic acid, aluminium sulphate and combinations thereof.

10. Floral distribution kit according to any one of claims 5-9, wherein the water that comprises the flower treatment product contains at least 0.5 mg/l of a biocide selected from the group consisting of quaternary ammonium compounds containing at least one C₆-C₂₄ hydrocarbon residue, guanidine compounds containing at least one C₆-C₂₄ hydrocarbon residue, bromo-nitrogen derivates, isothiazolinones, hydroxyquinolines, 1,3-dihalo-5,5-dimethylhydantoins, chloramphenicol, spectinomycin, alkyl parabens, salicylic acids and salts thereof, benzoic acids and salts thereof, sorbates, thiabendazole1,3-dichloro-5,5-dimethylhydantoin, N-chlorosulfonamides, isocyanurates, lysozymes and combinations thereof.

11. A treatment product for cut flowers, said treatment product comprising by weight of dry matter:
a) 0-99% (w/w) of a carbohydrate selected from the group consisting of glucose, fructose, sucrose, lactose, maltose and combinations thereof;
b) 0-50% (w/w) of an acidulant selected from the group consisting of gluconic acid, glucono-deltalactone, citric acid, tartaric acid, propionic acid, glycolic acid, fumaric acid, sorbic acid, malic acid, aluminium sulphate and combinations thereof;
c) 0-99.9% (w/w) of a biocide selected from the group consisting of quaternary ammonium compounds containing at least one C₆-C₂₄ hydrocarbon residue, guanidine compounds containing at least one C₆-C₂₄ hydrocarbon residue, bromo-nitrogen derivates, isothiazolinones, hydroxyquinolines, 1,3-dihalo-5,5-dimethylhydantoins, chloramphenicol, spectinomycin, alkyl parabens, salicylic acids and salts thereof, benzoic acids and salts thereof, sorbates, thiabendazole1,3-dichloro-5,5-dimethylhydantoin, N-chlorosulfonamides, isocyanurates, lysozymes and combinations thereof;
d) 0-50% (w/w) of a surfactant selected from non-ionic surfactants, anionic surfactants and combinations thereof;
wherein the components (a) to (d) together represent at least 10% (w/w) of the dry matter contained in the treatment product; and wherein the treatment product further contains 20-50,000 mg of a tracer element by kg of dry matter, said tracer element being selected from lithium, molybdenum and cerium.

12. Treatment product according to claim 11, wherein the product is an aqueous liquid containing 10-800 g of dry matter per litre.

13. Treatment product according to claim 11 or 12, wherein the product is a powder or a tablet.

## Patentansprüche

1. Verfahren zum Bestimmen der Konzentration eines Behandlungsprodukts in Wasser, in das Schnittblumen gestellt werden, wobei das Verfahren die Schritte umfasst:
a. Bereitstellen eines Behandlungsprodukts, das eine bekannte Menge eines Indikatorelements, ausgewählt aus Lithium, Molybdän, Bor, Cer, Silber, Selen, Strontium, Zinn, Cäsium und Lanthan, enthält, wobei das Behandlungsprodukt sich für die Anwendung auf Wasser eignet, in das Schnittblumen gestellt werden;
b. Anwenden des Behandlungsprodukts auf Wasser, in das Schnittblumen gestellt werden;
c. quantitatives Analysieren der Konzentration des Indikatorelements in dem Wasser, in das Schnittblumen gestellt werden, wobei das quantitative Analysieren die Verwendung einer Spektrometrie mit induktiv gekoppeltem Plasma (ICP) umfasst;
d. Vergleichen der quantifizierten Indikatorkonzentration mit einem vorgegebenen Zielwert; und
e. gegebenenfalls Einstellen der Menge des Behandlungsprodukts, die auf das Wasser angewandt wird, in das Schnittblumen gestellt werden, auf der Basis des Unterschieds zwischen der quantifizierten Konzentration und dem Zielwert.

2. Verfahren gemäß Anspruch 1, wobei das Indikatorelement aus Lithium und Molybdän ausgewählt ist.

3. Verfahren gemäß Anspruch 1 oder 2, wobei das Behandlungsprodukt, bezogen auf das Gewicht der Trockensubstanz, umfasst:
a) 0-99% (Gew./Gew.) eines Kohlenhydrats ausgewählt aus der Gruppe bestehend aus Glucose, Fructose, Sucrose, Lactose, Maltose und Kombinationen davon;
b) 0-50% (Gew./Gew.) eines Säuerungsmittels ausgewählt aus der Gruppe bestehend aus Gluconsäure, Glucono-delta-lacton, Citronensäure, Weinsäure, Propionsäure, Glycolsäure, Fumarsäure, Sorbinsäure, Äpfelsäure, Aluminiumsulfat und Kombinationen davon;
c) 0-99,9 % (Gew./Gew.) eines Biozids ausgewählt aus der Gruppe bestehend aus quartären Ammoniumverbindungen, die wenigstens einen C₆-C₂₄-Kohlenwasserstoffrest enthalten, Guanidinverbindungen, die wenigstens einen C₆-C₂₄-Kohlenwasserstoffrest enthalten, Brom-Stickstoff-Derivaten, Isothiazolinonen, Hydroxychinolinen, 1,3-Dihalogen-5,5-dimethylhydantoinen, Chloramphenicol, Spectinomycin, Alkylparabenen, Salicylsäuren und Salzen davon, Benzoesäuren und Salzen davon, Sorbaten, Thiabendazol-1,3-dichlor-5,5-dimethylhydantoin, N-Chlorsulfonamiden, Isocyanuraten, Lysozymen und Kombinationen davon:
d) 0-50% (Gew./Gew.) eines oberflächenaktiven Stoffs ausgewählt aus nicht-ionischen oberflächenaktiven Stoffen, anionischen oberflächenaktiven Stoffen und Kombinationen davon;
wobei die Komponenten (a) bis (d) zusammen wenigstens 10% (Gew./Gew.) der in dem Behandlungsprodukt enthaltenen Trockensubstanz darstellen; und wobei das Behandlungsprodukt außerdem 20-50.000 mg des Indikatorelements pro kg Trockensubstanz enthält, wobei das Indikatorelement aus Lithium, Molybdän, Cer und Silber ausgewählt ist.

4. Verfahren gemäß Anspruch 3, wobei das Behandlungsprodukt wenigstens 2, vorzugsweise wenigstens 3 der Blumenbehandlungskomponenten (a) bis (d) umfasst.

5. Blumenvertriebskit umfassend:
• ein Gefäß mit einer offenen Oberseite und einem hohlen Inneren, das zum Aufnehmen von Wasser darin eingerichtet ist;
• eine Menge von Wasser, welche ein Blumenbehandlungsprodukt umfasst und welche in dem hohlen Inneren gehalten wird;
• eine oder mehrere Schnittblumen, deren Stängel durch die offene Oberseite des Gefäßes in das Wasser eingebracht sind, welches ein Blumenbehandlungsprodukt umfasst;
wobei das Wasser, welches das Blumenbehandlungsprodukt umfasst, 0,05-100 mg/l eines Indikatorelements, ausgewählt aus Lithium, Molybdän und Cer;
und eines oder mehrere der folgenden enthält:
• wenigstens 500 mg/l Kohlenhydrat ausgewählt aus der Gruppe bestehend aus Glucose, Fructose, Sucrose, Lactose, Maltose und Kombinationen davon;
• wenigstens 50 mg/l Säuerungsmittel ausgewählt aus der Gruppe bestehend aus Gluconsäure, Glucono-delta-lacton, Citronensäure, Weinsäure, Propionsäure, Glycolsäure, Fumarsäure, Sorbinsäure, Äpfelsäure, Aluminiumsulfat und Kombinationen davon;
• wenigstens 0,5 mg/l Biozid ausgewählt aus der Gruppe bestehend aus quartären Ammoniumverbindungen, die wenigstens einen C₆-C₂₄-Kohlenwasserstoffrest enthalten, Guanidinverbindungen, die wenigstens einen C₆-C₂₄-Kohlenwasserstoffrest enthalten, Brom-Stickstoff-Derivaten, Isothiazolinonen, Hydroxychinolinen, 1,3-Dihalogen-5,5-dimethylhydantoinen, Chloramphenicol, Spectinomycin, Alkylparabenen, Salicylsäuren und Salzen davon, Benzoesäuren und Salzen davon, Sorbaten, Thiabendazol-1,3-dichlor-5,5-dimethylhydantoin, N-Chlorsulfonamiden, Isocyanuraten, Lysozymen und Kombinationen davon;
• wenigstens 5 mg/l oberflächenaktiven Stoff, ausgewählt aus nicht-ionischen oberflächenaktiven Stoffen, anionischen oberflächenaktiven Stoffen und Kombinationen davon.

6. Blumenvertriebskit gemäß Anspruch 5, wobei das Wasser, welches das Blumenbehandlungsprodukt umfasst, ein Indikatorelement, ausgewählt aus 0,1-50 mg/l Lithium und 0,1-10 mg/l Molybdän, enthält.

7. Blumenvertriebskit gemäß Anspruch 5 oder 6, wobei das Wasser, welches das Blumenbehandlungsprodukt umfasst, 0,15-10 mg/l Lithium enthält.

8. Blumenvertriebskit gemäß einem der Ansprüche 5-7, wobei das Wasser, welches das Blumenbehandlungsprodukt umfasst, wenigstens 500 mg/l eines Kohlenhydrats, ausgewählt aus der Gruppe bestehend aus Glucose, Fructose, Sucrose, Lactose, Maltose und Kombinationen davon, enthält.

9. Blumenvertriebskit gemäß einem der Ansprüche 5-8, wobei das Wasser, welches das Blumenbehandlungsprodukt umfasst, wenigstens 50 mg/l eines Säuerungsmittels, ausgewählt aus der Gruppe bestehend aus Gluconsäure, Glucono-delta-lacton, Citronensäure, Weinsäure, Propionsäure, Glycolsäure, Fumarsäure, Sorbinsäure, Äpfelsäure, Aluminiumsulfat und Kombinationen davon, enthält.

10. Blumenvertriebskit gemäß einem der Ansprüche 5-9, wobei das Wasser, welches das Blumenbehandlungsprodukt umfasst, wenigstens 0,5 mg/l eines Biozids, ausgewählt aus der Gruppe bestehend aus quartären Ammoniumverbindungen, die wenigstens einen C₆-C₂₄-Kohlenwasserstoffrest enthalten, Guanidinverbindungen, die wenigstens einen C₆-C₂₄-Kohlenwasserstoffrest enthalten, Brom-Stickstoff-Derivaten, Isothiazolinonen, Hydroxychinolinen, 1,3-Dihalogen-5,5-dimethylhydantoinen, Chloramphenicol, Spectinomycin, Alkylparabenen, Salicylsäuren und Salzen davon, Benzoesäuren und Salzen davon, Sorbaten, Thiabendazol-1,3-dichlor-5,5-dimethylhydantoin, N-Chlorsulfonamiden, Isocyanuraten, Lysozymen und Kombinationen davon, enthält.

11. Blumenbehandlungsprodukt für Schnittblumen, wobei das Blumenbehandlungsprodukt, bezogen auf das Gewicht der Trockensubstanz, umfasst:
a) 0-99% (Gew./Gew.) eines Kohlenhydrats ausgewählt aus der Gruppe bestehend aus Glucose, Fructose, Sucrose, Lactose, Maltose und Kombinationen davon;
b) 0-50% (Gew./Gew.) eines Säuerungsmittels ausgewählt aus der Gruppe bestehend aus Gluconsäure, Glucono-delta-lacton, Citronensäure, Weinsäure, Propionsäure, Glycolsäure, Fumarsäure, Sorbinsäure, Äpfelsäure, Aluminiumsulfat und Kombinationen davon;
c) 0-99,9% (Gew./Gew.) eines Biozids ausgewählt aus der Gruppe bestehend aus quartären Ammoniumverbindungen, die wenigstens einen C₆-C₂₄-Kohlenwasserstoffrest enthalten, Guanidinverbindungen, die wenigstens einen C₆-C₂₄-Kohlenwasserstoffrest enthalten, Brom-Stickstoff-Derivaten, Isothiazolinonen, Hydroxychinolinen, 1,3-Dihalogen-5,5-dimethylhydantoinen, Chloramphenicol, Spectinomycin, Alkylparabenen, Salicylsäuren und Salzen davon, Benzoesäuren und Salzen davon, Sorbaten, Thiabendazol-1,3-dichlor-5,5-dimethylhydantoin, N-Chlorsulfonamiden, Isocyanuraten, Lysozymen und Kombinationen davon:
d) 0-50% (Gew./Gew.) eines oberflächenaktiven Stoffs ausgewählt aus nicht-ionischen oberflächenaktiven Stoffen, anionischen oberflächenaktiven Stoffen und Kombinationen davon;
wobei die Komponenten (a) bis (d) zusammen wenigstens 10% (Gew./Gew.) der in dem Behandlungsprodukt enthaltenen Trockensubstanz darstellen; und wobei das Behandlungsprodukt außerdem 20-50.000 mg eines Indikatorelements pro kg Trockensubstanz enthält, wobei das Indikatorelement aus Lithium, Molybdän und Cer ausgewählt ist.

12. Behandlungsprodukt gemäß Anspruch 11, wobei das Produkt eine wässrige Flüssigkeit ist, die 10-800 g Trockensubstanz pro Liter enthält.

13. Behandlungsprodukt gemäß Anspruch 11 oder 12, wobei das Produkt ein Pulver oder eine Tablette ist.

## Revendications

1. Méthode de détermination de la concentration d'un produit de traitement dans de l'eau dans laquelle des fleurs coupées sont placées, ladite méthode comprenant les étapes consistant à :
a. fournir un produit de traitement contenant une quantité connue d'un élément traceur choisi parmi le lithium, le molybdène, le bore, le cérium, l'argent, le sélénium, le strontium, l'étain, le césium et le lanthane, ledit produit de traitement étant approprié pour une application à de l'eau dans laquelle des fleurs coupées sont placées :
b. appliquer le produit de traitement à de l'eau dans laquelle des fleurs coupées sont placées :
c. analyser quantitativement la concentration de l'élément marqueur dans ladite eau dans laquelle des fleurs coupées sont placées, ladite analyse quantitative comprenant l'utilisation d'une spectrométrie au plasma couplée de manière inductive (ICP) ;
d. comparer la concentration en traceur quantifiée avec une valeur cible préétablie ; et
e. facultativement, ajuster la quantité de produit de traitement appliquée à ladite eau dans laquelle des fleurs coupées sont placées, sur la base de la différence entre la concentration quantifiée et la valeur cible.

2. Méthode selon la revendication 1, dans laquelle l'élément traceur est choisi parmi le lithium et le molybdène.

3. Procédé selon les revendications 1 ou 2, dans laquelle le produit de traitement comprend en poids de matière sèche :
a) 0 à 99% (p/p) d'un carbohydrate choisi dans le groupe constitué par le glucose, le fructose, le saccharose, le lactose, le maltose et leurs combinaisons,
b) 0 à 50% (p/p) d'un acidifiant choisi dans le groupe constitué par l'acide gluconique, glucono-deltalactone, l'acide citrique, l'acide tartarique, l'acide propionique, l'acide glycolique, l'acide fumarique, l'acide sorbique, l'acide malique, le sulfate d'aluminium et des combinaisons de ceux-ci ;
c) 0 à 99,9% (p/p) d'un biocide sélectionné dans le groupe constitué par des composés d'ammonium quaternaire contenant au moins un résidu d'hydrocarbure en C₆-C₂₄, des composés de guanidine contenant au moins un résidu d'hydrocarbure en C₆-C₂₄, des dérivés bromo-azotés, isothiazolinones, hydroxyquinoléines, 5,5-diméthylhydantoïnes 1,3-dihalogéno-, chloramphénicol, spectinomycine, les alkyl parabens, les acides salicyliques et leurs sels, les acides benzoïques et leurs sels, les sorbates, thiabendazole1,3-dichloro-5,5-diméthylhydantoïne, N-chlorosulfonamides. isocyanurates, lysozymes et des combinaisons de ceux-ci,
d) 0 à 50% (p/p) d'un agent tensioactif choisi parmi les tensioactifs non ioniques, les tensioactifs anioniques et les combinaisons de ceux-ci ;
dans laquelle les composants (a) à (d) représentent ensemble au moins 10% (p/p) de la matière sèche contenue dans le produit de traitement ; et dans laquelle le produit de traitement contient en outre de 20 à 50,000 mg de l'élément traceur par kg de matière sèche, ledit élément traceur étant choisi parmi le lithium, le molybdène, le cerium et l'argent.

4. Méthode selon la revendication 3, dans laquelle le produit comprend au moins 2, de préférence au moins trois, des composants de traitement de fleur (a) à (d).

5. Kit de distribution florale comprenant :
- un récipient ayant une partie supérieure ouverte et un intérieur creux adapté pour recevoir de l'eau ;
- une quantité d'eau qui comprend un produit de traitement de fleur, et qui est maintenu dans l'intérieur creux ; et
- une ou plusieurs fleurs coupées dont les tiges sont insérées par la partie supérieure ouverte du récipient dans l'eau qui comprend un produit de traitement de fleur ;
dans lequel l'eau comprenant le produit de traitement de fleur contient de 0,05 à 100 mg/l d'un élément traceur choisi parmi le lithium. le molybdène et le cérium ; et un ou plusieurs éléments parmi :
- au moins 500 mg/l de carbohydrate choisi dans le groupe constitué de glucose, fructose, saccharose, lactose, maltose et des combinaisons de ceux-ci;
- au moins 50 mg/l, d'acidulant choisi dans le groupe constitué d'acide gluconique, glucono-deltalactone, acide citrique, acide tartrique, acide propionique. acide glycolique, acide fumarique, acide sorbique, acide malique, sulfate d'aluminium et des combinaisons de ceux-ci ;
- au moins 0,5 mg/l de biocide choisi dans le groupe constitué par des composés d'ammonium quaternaire contenant au moins un résidu d'hydrocarbure en C₆-C₂₄, composés de guanidine contenant au moins un résidu d'hydrocarbure en C₆-C₂₄, dérivés bromo-azotés, isothiazolinones, hydroxyquinoléines, 1,3-dihalo-5,5-diméthylhydantoïnes, chloramphénicol, spectinomycine, alkyl parabènes, acides salicyliques et leurs sels, acides benzoïques et leurs sels, sorbates, thiabendazolel,3-dichloro-5,5-diméthyl-hydantoïne, N-chlorosulfonamides, isocyanurates, lysozymes et des combinaisons de ceux-ci ;
- au moins 5 mg/l d'agent tensioactif choisi parmi les tensioactifs non ioniques, les tensioactifs anioniques et des combinaisons de ceux-ci.

6. Kit de distribution florale selon la revendication 5, dans lequel l'eau qui comprend le produit de traitement de fleur contient un élément traceur choisi parmi 0,1 à 50 mg/l de lithium et 0.1 à 10 mg/l de molybdène

7. Kit de distribution florale selon les revendications 5 ou 6, dans lequel l'eau qui comprend le produit de traitement de fleur contient de 0,15 à 10 mg/l de lithium

8. Kit de distribution florale selon l'une quelconque des revendications 5-7, dans lequel l'eau qui comprend le produit de traitement de fleurs contient au moins 500 mg/l d'un hydrate de carbone choisi dans le groupe constitué par le glucose, le fructose. le saccharose, le lactose, le maltose et des combinaisons de ceux-ci.

9. Kit de distribution florale selon les revendications 5 à 8, dans lequel dans lequel l'eau qui comprend le produit de traitement de fleur contient au moins 50 mg/l d'acidulant choisi dans le groupe constitué d'acide gluconique, glucono-deltalactone, acide citrique, acide tartrique, acide propionique. acide glycolique, acide fumarique, acide sorbique, acide malique, sulfate d'aluminium et des combinaisons de ceux-ci

10. Kit de distribution florale selon l'une quelconque des revendications 5 à 9, dans lequel l'eau qui comprend le produit de traitement de fleur contient au moins 0,5 mg/l de biocide choisi dans le groupe constitué par des composés d'ammonium quaternaire contenant au moins un résidu d'hydrocarbure en C₆-C₂₄, composés de guanidine contenant au moins un résidu d'hydrocarbure en C₆-C₂₄, dérivés bromo-azotés, isothiazolinones, hydroxyquinoléines, 1,3-dihalo-5,5-diméthylhydantoïnes, chloramphénicol, spectinomycine, alkyl parabènes, acides salicyliques et leurs sels, acides benzoïques et leurs sels, sorbates, thiabendazolel,3-dichloro-5,5-diméthylhydantoïne, N-chlorosulfonamides, isocyanurates, lysozymes et des combinaisons de ceux-ci.

11. Produit de traitement pour des fleurs coupées, ledit produit de traitement comprenant, en poids de matière sèche :
a) 0 à 99% (p/p) d'un carbohydrate choisi dans le groupe constitué par le glucose, le fructose, le saccharose, le lactose, le maltose et leurs combinaisons,
b) 0 à 50% (p/p) d'un acidifiant choisi dans le groupe constitué par l'acide gluconique, glucono-deltalactone, l'acide citrique, l'acide tartarique, l'acide propionique, l'acide glycolique, l'acide fumarique, l'acide sorbique, l'acide malique, le sulfate d'aluminium et des combinaisons de ceux-ci ;
c) 0 à 99,9% (p/p) d'un biocide sélectionné dans le groupe constitué par des composés d'ammonium quaternaire contenant au moins un résidu d'hydrocarbure en C₆-C₂₄, des composés de guanidine contenant au moins un résidu d'hydrocarbure en C₆-C₂₄, des dérivés bromo-azotés, isothiazolinones, hydroxyquinoléines, 5,5-diméthylhydantoïnes 1,3-dihalogéno-, chloramphénicol, spectinomycine, les alkyl parabens, les acides salicyliques et leurs sels, les acides benzoïques et leurs sels, les sorbates, thiabendazolel,3-dichloro-5,5-diméthylhydantoïne, N-chlorosulfonamides, isocyanurates, lysozymes et des combinaisons de ceux-ci,
d) 0 à 50% (p/p) d'un agent tensioactif choisi parmi les tensioactifs non ioniques, les tensioactifs anioniques et les combinaisons de ceux-ci ;
les composants (a) à (d) représentant ensemble au moins 10% (p/p) de la matière sèche contenue dans le produit de traitement ; et le produit de traitement contenant en outre de 20 à 50,000 mg de l'élément traceur par kg de matière sèche, ledit élément traceur étant choisi parmi le lithium, le molybdène et le cerium.

12. Produit de traitement selon la revendication 11, dans lequel le produit est un liquide aqueux contenant 10 à 800 g de matière sèche par litre.

13. Produit de traitement selon les revendications 11 ou 12, dans lequel le produit est une poudre ou un comprimé.
